# EUROPÄISCHE PATENTANMELDUNG

(11) **EP 2 186 840 A1**
(43) Veröffentlichungstag der Anmeldung: **19.05.2010**
(21) Anmeldenummer: 08019883.1
(22) Anmeldetag: 14.11.2008
(51) Int. Cl.: C08G 18/08, C08G 18/12, C08G 18/76, C09J 175/08

(54) **Anionisch modifizierte Polyurethandispersionen**

(71) Anmelder: Bayer MaterialScience AG, 51368 Leverkusen (DE)
(72) Erfinder: Kraus, Harald, Dr., 51371 Leverkusen (DE); Arndt, Wolfgang, 41542 Dormagen (DE); Henning, Wolfgang, Dr., 51515 Kürten (DE); Münzmay, Thomas, Dr., 41539 Dormagen (DE)

(57) **Zusammenfassung**

Die Erfindung betrifft anionisch modifizierte Polyurethanharnstoffe auf Basis aromatischer Polyisocyanate, ein Verfahren zu deren Herstellung und deren Verwendung zur Herstellung von Beschichtungen von flächigen Gebilden oder zur Herstellung von Klebstoffen.

## Beschreibung

Die Erfindung betrifft anionisch modifizierte Polyurethanharnstoffe auf Basis aromatischer Polyisocyanate, ein Verfahren zu deren Herstellung und deren Verwendung zur Herstellung von Beschichtungen von flächigen Gebilden oder zur Herstellung von Klebstoffen.

Einkomponentige Polyurethanklebstoffe gewinnen im Bereich der Holzverklebung zunehmend an Bedeutung, da sie gegenüber den ebenfalls häufig eingesetzten Polyvinylacetat-Dispersionen erhebliche Vorteile in Bezug auf Wärme- und Wasserfestigkeit haben. Bei diesen Polyurethanklebstoffen handelt es sich in der Regel um NCO-terminierte Polyurethanpräpolymere mit signifikanten NCO-Gehalten zwischen 5 und 20%. Diese reagieren nach dem Auftragen auf Holz mit dessen Substratfeuchte, beziehungsweise der Feuchtigkeit der Umgebungsluft zu einem Polyurethan-Polyharnstoff. Polyurethan-Systeme auf Polyetherbasis werden in der Regel denen auf Polyester-Basis vorgezogen, da sie resistenter gegen Feuchtigkeit und Mikroben sind. Entsprechende Polyurethan-Klebstoffe sind beispielsweise in der WO-A 03/066700 beschrieben.

Ein Nachteil bei der Verwendung von Polyurethanpräpolymeren als einkomponentige Polyurethanklebstoffe ist in dem hohen Gehalt an NCO-Gruppen zu sehen, die bei der Formulierung, Verarbeitung und Applikation der Klebstoffe Arbeiten unter Feuchtigkeitsausschluss erfordern. Zusätzlich muss durch entsprechende Schutzmassnahmen ein direkter Hautkontakt vermieden werden.

Ein Ausweg kann die Verwendung von wässrigen Polyurethan- bzw. Polyurethanharnstoffdispersionen auf Polyetherbasis sein. Diese sind im Stand der Technik beschrieben. So ist beispielsweise in der EP-A 0 615 988 die Verwendung von wässrigen Polyurethandispersionen, enthaltend ein Polyurethan mit sehr geringem Harnstoffgruppengehalt, als Klebstoff beschrieben.

Der Nachteil der aus dem Stand der Technik bekannten Polyurethan- bzw. Polyurethanharnstoff-dispersionen sind die unzureichenden Zugscherfestigkeiten, die bei der Verwendung als einkomponentige Klebstoffe für die Holzverklebung erzielt werden können.

Aufgabe der vorliegenden Erfindung war somit die Bereitstellung von Polyurethan- bzw. Polyurethanharnstoffdispersionen auf Polyetherbasis, die bei der Verwendung als einkomponentige Klebstoffe für die Holzverklebung zu verbesserten Zugscherfestigkeiten führen.

Es wurde nun gefunden, dass die gestellte Aufgabe durch die erfindungsgemäßen Dispersionen von Polyurethanharnstoffen aus aromatischen Diisocyanaten gelöst wird.

Gegenstand der vorliegenden Erfindung sind wässrige Polyurethanharnstoff-Dispersionen enthaltend ein Polyurethanharnstoff-Polymer mit Struktureinheiten der allgemeinen Formel (I) 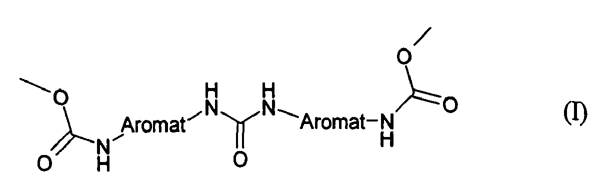 in welcher Aromat = Phenylen, Tolylen, Xylylen, Tetramethylxylylen oder Diphenylenmethan, bevorzugt Tolylen oder Diphenylenmethan ist und welches aufgebaut ist aus
A) einem oder mehreren aromatischen Diisocyanaten,
B) mindestens einem Polyetherpolyol mit einem zahlenmittleren Molekulargewicht von 300 bis 1500 Da, bevorzugt von 500 bis 1250 Da,
C) mindestens einer Verbindung, welche ein bis zwei isocyanatreaktive Gruppen sowie mindestens eine ionogene Gruppe aufweist,
D) mindestens einem Polyol mit einem zahlenmittleren Molekulargewicht von 60 bis 499 Da, bevorzugt 90 bis 220 Da,
E) Wasser,
wobei die mittlere Gesamtfunktionalität der isocyanatreaktiven Verbindungen B) bis D) von 1,85 bis 2,2, bevorzugt von 1,9 bis 2,1 beträgt und in dem Polyurethanharnstoff-Polymer die Summe des Gehaltes an aromatischen Harnstoffgruppen und des Gehaltes an Urethangruppen 2700 bis 5000 mmol pro kg, bevorzugt 2800 bis 4000 mmol pro kg und besonders bevorzugt 2850 bis 3500 mmol pro kg Polyurethanharnstoff-Polymer beträgt.

Als Diisocyanatkomponente A) seien beispielhaft genannt: 1,4-Diisocyanatobenzol, 2,4-Diisocyanatotoluol, 2,6-Diisocyanatotoluol, 4,4'-Diisocyanatodiphenylmethan, 2,2'- und 2,4'-Diisocyanatodiphenylmethan, Tetramethylxylylendiisocyanat, p-Xylylendiisocyanat sowie aus diesen Verbindungen bestehende Gemische. Bevorzugt sind 2,4-Diisocyanatotoluol, 2,6-Diisocyanatotoluol, 4,4'-Diisocyanatodiphenylmethan, 2,2'- bzw. 2,4'-Diisocyanatodiphenylmethan sowie aus diesen Verbindungen bestehende Gemische. Besonders bevorzugt sind 2,4-Diisocyanatotoluol oder 2,6-Diisocyanatotoluol oder deren Gemische.

Als Polyetherpolyole B) werden die Polyadditionsprodukte des Ethylenoxids, Propylenoxids, Butylenoxids sowie deren Misch- und Pfropfpolyadditionsprodukte sowie die durch Kondensation von mehrwertigen Alkoholen oder deren Mischungen und die durch Alkoxylierung von Wasser, mehrwertigen Alkoholen, Aminen oder Aminoalkoholen gewonnenen Polyether eingesetzt. Bevorzugt sind Homo- und/oder Mischpolyadditionsverbindungen von Ethylenoxid und/oder Propylenoxid des Molekulargewichts kleiner als 1500 Da, bevorzugt von 500 bis 1250 Da. Die mittlere Funktionalität der Polyetherpolyole ist größer 1,85, bevorzugt von 1,92 bis 3. Besonders bevorzugt sind difunktionelle Polyether mit einer Funktionalität von 1,95 bis 2,05.

Der Anteil an Ethylenoxid in den Mischpolyadditionsverbindungen von Ethylenoxid und Propylenoxid beträgt 1 bis 50%, bevorzugt 1 bis 30 %, besonders bevorzugt 5 bis 20%.

In einer besonders bevorzugten Ausführungsform der vorliegenden Erfindung ist das Polyetherpolyol B) ein Homopolyadditionsprodukt des Propylenoxids mit einem Molekulargewicht von 750 bis 1250 Da und einer Funktionalität von 1,95 bis 2,05.

In untergeordneter Menge können gegebenenfalls weiter höhermolekulare Polyhydroxylkomponenten, die aus der Polyurethanchemie an sich bekannt sind, z.B. aus den Klassen der Polyester-, Polylacton- oder Polycarbonatpolyole Verwendung finden.

Als ionogene Verbindungen C), die eine bis zwei isocyanatreaktive Gruppen sowie wenigstens eine ionogene Gruppe aufweisen, kommen Verbindungen wie z.B. Hydroxy- und Mercaptocarbonsäuren, Aminocarbonsäuren wie Glycin, Alanin oder 4-Aminobuttersäure, Di- und Polyhydroxycarbonsäuren wie Dimethylolpropionsäure oder Dimethylolbuttersäure oder Sulfonatgruppen aufweisende aliphatische Diole gemäß DE-A 2 446 440 (S. 4 - S. 6) und 2 437 218 (S.3 - 4) in Frage. Zu den bevorzugten ionogenen Komponenten C) gehören Dimethylolbutter- oder Dimethylolpropionsäure.

Sofern ionogene Komponenten C) in Form von nicht neutralisierten Carbon- und/oder Sulfonsäuren eingesetzt werden, kommen als Neutralisationsmittel bevorzugt tertiäre Amine wie Triethylamin, Tripropylamin, Tributylamin, Triisopropanolamin, Triethanolamin, N,N-Dimethylethanolamin oder Ammoniak oder Alkalihydroxide wie Natrium- oder Kaliumhydroxid oder Alkalicarbonate oder -hydrogencarbonate in Frage.

Als Polyole D) einsetzbar sind Verbindungen, deren Molekulargewicht größer als 60 Da ist, bevorzugt zwischen 90 und 220 Da liegt, und primäre oder sekundäre Alkoholgruppen enthalten. Geeignet als Verbindungen D) sind beispielsweise Diole wie Ethandiol, Di-, Tri-, Tetraethylenglykol, 1,2-Propandiol, Di-, Tri-, Tetrapropylenglykol, 1,3-Propandiol, Butandiol-1,4, Butandiol-1,3, Butandiol-2,3, Pentandiol-1,5, Hexandiol-1,6, 2,2-Dimethyl-1,3-propandiol, 1,4-Dihydroxycyclohexan, 1,4-Dimethylolcyclohexan, Octandiol-1,8, Decandiol-1,10, Dodecandiol-1,12 oder deren Gemische. Weiterhin als Komponente D) geeignete Verbindungen sind Polyolverbindungen mit einer Hydroxylfunktionalität größer 2, wie beispielsweise Trimethylolpropan oder Glycerin. Besonders bevorzugt als Komponete D) sind Butandiol-1,4, Butandiol-1,3, Butandiol-2,3, Pentandiol-1,5 oder Hexandiol-1,6.

Die Herstellung der erfindungsgemäßen wässrigen Polyurethan- bzw. Polyurethan-Harnstoff-Dispersonen kann in einer oder mehreren Stufen in homogener oder bei mehrstufiger Umsetzung, teilweise in disperser Phase durchgeführt werden. Nach vollständig oder teilweise durchgeführter Polyaddition erfolgt ein Dispergier-, Emulgier-oder Lösungsschritt. Im Anschluss erfolgt gegebenenfalls eine weitere Polyaddition oder Modifikation in disperser Phase. Zur Herstellung können sämtliche, aus dem Stand der Technik bekannte Verfahren wie Emulgator-Scherkraft-, Aceton-, Prepolymer-Misch-, Schmelz-Emulgier-, Ketimin- und Feststoff-Spontan-Dispergier-Verfahren oder Abkömmlinge davon verwendet werden. Bevorzugt sind das Schmelz-Emulgier-, Prepolymer-Misch- und das Aceton-Verfahren. Besonders bevorzugt sind das Prepolymer-Misch- und das Aceton-Verfahren, ganz besonders bevorzugt ist das Aceton-Vefahren.

Gegenstand der vorliegenden Erfindung ist auch ein Verfahren zur Herstellung der erfindungsgemäßen wässrigen Polyurethanpolyharnstoff-Dispersionen, **dadurch gekennzeichnet, dass** die Komponenten A), B), C) und D) zur Herstellung eines Polyurethan-Prepolymers im Rektor ganz oder teilweise vorgelegt werden und gegebenenfalls mit einem mit Wasser mischbaren aber gegenüber Isocyanatgruppen inerten Lösungsmittel verdünnt, bevorzugt aber ohne Lösungsmittel, und auf Temperaturen im Bereich von 50 bis 120°C, bevorzugt im Bereich von 70 bis 100°C aufgeheizt werden und anschließend die gegebenenfalls zu Beginn der Reaktion noch nicht zugegebenen Bestandteile A), B), C) oder D) zudosiert und vor oder während der Dispergierung eine Neutralisation mit einem geeigneten Neutralisationsmittel erfolgt und anschließend das gegebenenfalls eingesetzte organische Lösungsmittel abdestilliert wird.

Geeignete Lösungsmittel sind z.B. Aceton, Butanon, Tetrahydrofuran, Dioxan, Acetonitril, Dipropylenglykoldimethylether oder 1-Methyl-2-pyrrolidon, die nicht nur zu Beginn der Herstellung, sondern gegebenenfalls in Teilen auch später zugegeben werden können. Bevorzugt sind Aceton und Butanon. Es ist möglich, die Reaktion unter Normaldruck oder erhöhtem Druck durchzuführen.

Zur Herstellung des Prepolymers werden die Einsatzmengen der Einzelkomponenten A) bis D) so bemessen, dass eine Isocyanatkennzahl von 1,05 bis 3,0, bevorzugt von 1,1 bis 1,8 resultiert. Der Isocyanatgehalt der Prepolymere liegt zwischen 1,0 und 9,0 %, bevorzugt zwischen 1,3 und 7,0 %, besonders bevorzugt zwischen 1,5 und 6,0 %.

Es werden 10 bis 60 Gew.-Teile, bevorzugt 20 bis 40 Gew.-Teile der Komponente A), 40 bis 80 Gew.-Teile, bevorzugt 50 bis 70 Gew.-Teile der Komponente B), 1 bis 20 Gew.-Teile, bevorzugt 3 bis 12 Gew.-Teile der Komponente C), und 0,5 bis 20 Gew.-Teile, bevorzugt 1 bis 10 Gew.-Teile der Komponente D) eingesetzt mit der Vorgabe, dass die Summe der Komponenten 100 ergibt.

Die Umsetzung der Komponenten A) mit B), C) und D) erfolgt bezogen auf die Gesamtmenge an mit Isocyanaten reaktiven Gruppen, teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, z.B. Infrarot- oder Nahinfrarot-Spektren, Bestimmungen des Brechungsindex als auch chemische Analysen, wie Titrationen von entnommenen Proben vorgenommen werden.

Zur Beschleunigung der Isocyanatadditionsreaktion können übliche Katalysatoren, wie sie zur Beschleunigung der NCO-OH-Reaktion dem Fachmann bekannt sind, eingesetzt werden. Beispiele sind Triethylamin, 1,4-Diazabicyclo-[2,2,2]-octan, Dibutylzinnoxid, Zinndioktoat oder Dibutylzinndilaurat, Zinn-bis-(2-ethylhexanoat) oder andere metallorganische Verbindungen.

Zwecks Herstellung der Polyurethan- bzw. Polyurethan-Harnstoff-Dispersion wird das Prepolymere direkt oder nach Lösen in einem geeigneten Lösemittel, bevorzugt Aceton, gegebenenfalls unter starker Scherung, wie z.B. starkem Rühren, entweder in das Dispergierwasser eingetragen oder man rührt umgekehrt das Dispergierwasser zu dem Prepolymeren.

Sofern Komponenten C) mit ionogene Gruppen in Form von nicht neutralisierten Carbon- und/oder Sulfonsäuren eingesetzt werden, erfolgt vor oder während der Dispergierung eine Neutralisation mit einem geeigneten Neutralisationsmittel, bevorzugt sind tertiäre Amine wie Triethylamin, Tripropylamin, Tributylamin, Triethanolamin, Triisopropanolamin, Ethyldiisopropylamin, N,N-Dimethylethanolamin sowie Alkalihydroxide, Alkalicarbonate und/oder -hydrogencarbonate. Die Menge wird so bemessen, dass der Neutralisationsgrad bevorzugt zwischen 40 und 200% liegt, besonders bevorzugt zwischen 50 und 100%.

Während und/oder nach der Dispergierung reagieren die noch vorhandenen Isocyanatgruppen mit Wasser unter Ausbildung von Harnstoffgruppen ab.

Nach der Dispergierung wird das gegebenenfalls eingesetzte organische Lösungsmittel, beispielsweise Aceton, abdestilliert.

Die Dispersionen haben einen Festkörpergehalt von 10 bis 70 Gew.-%, bevorzugt 25 bis 50 Gew.-% und besonders bevorzugt 30 bis 40 Gew.-%.

Im allgemeinen werden die Mengen an Ausgangskomponenten A) bis D) bei dem erfindungsgemäßen Verfahren so bemessen, dass anionisch modifizierte Polyurethanharnstoffe mit 50 bis 750 mmol, bevorzugt 200 bis 600 mmol und besonders bevorzugt von 250 bis 550 mmol anionischer Gruppen/kg Polymer resultieren.

Gegenstand der Erfindung ist die Verwendung der erfindungsgemäßen Polyurethanharnstoff-Dispersionen zur Herstellung von Beschichtungen von flächigen Gebilden oder als Klebstoff.

Ebenfalls Gegenstand der vorliegenden Erfindung sind Klebstoffe, enthaltend die erfindungsgemäßen Polyurethanharnstoff-Dispersionen.

Die Klebstoffe, enthaltend die erfindungsgemäßen Polyurethanharnstoffi-Dispersionen, eignen sich zum Verkleben beliebiger Substrate wie z.B. Papier, Pappe, Holz, Kork, Textilien, Metall, Leder , polymere oder mineralische Materialen. Besonders eignen sich die erfindungsgemäßen Klebstoffe zum Kleben von Holz oder Kork.

Die Klebstoffe, enthaltend die erfindungsgemäßen Polyurethanharnstoff-Dispersionen, werden bevorzugt nach dem Verfahren der Nassverklebung auf die zu verklebenden Substrate aufgebracht. Dies bedeutet, die Durchführung der Verklebung erfolgt ohne Trocknung unmittelbar nach dem Klebstoffauftrag. Bis zum Abbinden des Klebstoffes ist eine mechanische Fixierung der zu verbindenden Teile erforderlich. Es ist aber auch möglich, nach dem Thermoaktivierverfahren zu arbeiten. Hierbei wird die Dispersion auf das Substrat aufgebracht, und nach vollständiger Verdunstung des Wassers wird die Klebstoffschicht durch Erwärmen, z. B. mit einem Infrarotstrahler, aktiviert und in einen klebfähigen Zustand überführt.

Es resultiert ein Klebstoffverbund, umfassen mindestens ein Substrat und eine Klebstoffschicht, enthaltend die erfindungsgemäßen Polyurethanharnstoff-Dispersionen. Die so hergestellten Klebstoffverbünde führen nach Anwendung des Verfahrens der Nassverklebung von Holz zu Zugscherfestigkeit größer 4,4 N/mm, bevorzugt > 4,8 N/mm, besonders bevorzugt > 5,0 N/mm.

Gegenstand der vorliegenden Erfindung ist ein Klebstoffverbund, aufgebaut aus einem oder mehreren Substrat(en), die gleich oder verschieden sein können sowie einer Klebstoffschicht, enthaltend die erfindungsgemäßen Polyurethanharnstoff-Dispersionen.

Weiterhin eignen sich die Klebstoffe, enthaltend die erfindungsgemäßen Polyurethanharnstoff-Dispersionen, zum Verkleben von Substraten wie Glasfasergewebe, Kohlefasergewebe oder Mineralfasergewebe oder mineralische Untergründe. Bevorzugt werden dabei die Glasfasergewebe, Kohlefasergewebe oder Mineralfasergewebeverbünden auf einen mineralischen Untergrund geklebt. Dadurch können beispielsweise Gebäude oder Bauwerke besser gegen Zerstörung durch mechanische Einflüsse oder Erschütterungen geschützt werden.

Daher sind ebenfalls bevorzugt Klebstoffverbünde, aufgebaut aus einem oder mehreren Substraten, ausgewählt aus der Gruppe der Glasfaser-, Kohlefaser- oder Mineralfasergewebe und einer Klebstoffschicht, enthaltend die erfindungsgemäßen Polyurethanharnstoff-Dispersionen sowie einem mineralischen Untergrund.

Bevorzugt sind Klebstoffverbünde, aufgebaut aus zwei Holzsubstraten und einer Klebstoffschicht, enthaltend die erfindungsgemäßen Polyurethanharnstoff-Dispersionen.

Ebenfalls bevorzugt sind Klebstoffverbünde, aufgebaut aus einem mit polymerem Material gebundenem Korkgranulat, einer Korkscheibe und einer Klebstoffschicht, enthaltend die erfmdungsgemäßen Polyurethanharnstoff-Dispersionen.

### Beispiele

Die Prozentangaben der nachfolgenden Beispiele beziehen sich jeweils auf das Gewicht; Teile sind Gewichtsteile.

Nachstehend wird die Erfindung anhand der Beispiele näher erläutert. Die Zugscherfestigkeiten nach Anwendung des Verfahrens der Nassverklebung können nach folgender Methode bestimmt werden:

### Bestimmung der Zugscherfestigkeit nach Anwendung des Verfahrens der Nassverklebung:

Die Bestimmung wird einkomponentig (ohne Vernetzer) durchgeführt.

### Prüfmaterial/Prüfkörper

Buchenholz (gehobelt) / Buchenholz (gehobelt), Abmessungen: 40 x 20 x 5 mm

### Klebung und Messung

Die Klebstoffdispersion wird mittels eines Pinsels auf beide Buchenholzprüfkörper aufgetragen. Die Klebfläche beträgt 10 x 20 mm. Die beiden Prüfkörper werden übereinander gelegt und 72 h bei Raumtemperatur und 5 bar Druck gefügt.

Anschließend werden die Prüfkörper bei Raumtemperatur im Winkel von 180°C zur Klebefuge belastet und mit einer Geschwindigkeit von 100 mm pro Minute abgezogen. Die dafür benötigte Kraft (=Schälfestigkeit, Zugscherfestigkeit) wird gemessen. Es wird eine Fünffachbestimmung durchgeführt und der Durchschnittswert angegeben.

### Einsatzstoffe:

### Luphen^{®} D259U (BASF AG, Ludwigshafen/D):

Polyetherbasierte Polyurethan-Dispersion auf Basis eines Polypropylenoxid-Polyethers, Dimethylolpropionsäure und Toluolendiisocyanat mit einem geringen Gehalt an Harnstoffgruppen (<50 mmol/kg) und einem Festkörpergehalt von ca. 40%.

### Dispercoll^{®} U XP 2643 (Bayer MaterialScience AG, Leverkusen/D):

Polyetherbasierte Polyurethan-Dispersion auf Basis eines Polypropylenoxid -Polyethers mit einem mittlerem Molekulargewicht von 2000 g/mol, Dimethylolpropionsäure, Ethylendiamin und Toluolendiisocyanat. Der Festkörpergehalt beträgt ca. 40%.

### Beispiel 1 (erfindungsgemäß):

240 g (239,5 mmol) eines Polypropylenoxiddiols (OH-Zahl 112, mittleres Molekulargewicht 1000 g/mol) und 25,7 g (191,6 mmol) Dimethylolpropionsäure werden 60 min bei 100°C und 50 mbar entwässert. Anschließend werden 5,7 g Hexandiol-1,6 (48,2 mmol) zugegeben und die Mischung 15 min bei 100°C homogenisiert. Nach Abkühlung auf 70°C werden 121,7 g (699,4 mmol) eines 80:20-Gemisches aus 2,4- und 2,6-Toluylendiisocyanats untergerührt und nach 15 min die Temperatur konstant bei 90°C gehalten. Nach 3 h ist ein Isocyanatgehalt von 4,60 % erreicht. Es wird mit 69 g Aceton verdünnt und 10 min bei 50°C mit 12,6 g (124,5 mmol) Triethylamin versalzt. Anschließend wird die Prepolymermischung unter kräftigem Rühren zu 750 g Wasser gegeben und eine Stunde bei 40°C dispergiert. Nach destillativer Entfernung des Acetons erhält man eine feinteilige Dispersion mit einem Festkörpergehalt von 33%

### Gehalt an aromatischen Harnstoffgruppen der Formel (I) pro kg anionisch modifiziertem Polyurethanharnstoff: 543 mmol

### (Berechnung: 440,2 mmol NCO entsprechend 220,1 mmol Harnstoffgruppen pro 405,7 g Fesstoff)

### Gehalt an Urethangruppen pro kg anionisch modifiziertem Polyurethanharnstoff: 2363 mmol (Berechnung: 958,6 mmol pro 405,7 g Feststoff)

### Summe: 2906 mmol aromatische Harnstoffgruppen und Urethangruppen pro kg anionisch modifiziertem Polyurethanharnstoff

Die Bestimmung der Zugscherfestigkeit nach Anwendung des Verfahrens der Nassverklebung ergibt einen Wert von 6,7 N/mm².

### Beispiel 2 (erfindungsgemäß):

240 g (239,5 mmol) eines Polypropylenoxiddiols (OH-Zahl 112, mittleres Molekulargewicht 1000 g/mol) und 25,7 g (191,6 mmol) Dimethylolpropionsäure werden 60 min bei 100°C und 50 mbar entwässert. Anschließend werden 2,85 g Hexandiol-1,6 (24,1 mmol) zugegeben und die Mischung 15 min bei 100°C homogenisiert. Nach Abkühlung auf 70°C werden 121,7 g (699,4 mmol) eines 80:20-Gemisches aus 2,4- und 2,6-Toluylendiisocyanats untergerührt und nach 15 min die Temperatur konstant bei 90°C gehalten. Nach 4 h ist ein Isocyanatgehalt von 4,91 % erreicht. Es wird mit 69 g Aceton verdünnt und 10 min bei 50°C mit 12,6 g (124,5 mmol) Triethylamin versalzt. Anschließend wird die Prepolymermischung unter kräftigem Rühren zu 720 g Wasser gegeben und eine Stunde bei 40°C dispergiert. Nach destillativer Entfernung des Acetons erhält man eine feinteilige Dispersion mit einem Festkörpergehalt von 34%

### Gehalt an aromatischen Harnstoffgruppen der Formel (I) pro kg anionisch modifiziertem Polyurethanharnstoff: 606 mmol

### (Berechnung: 488,4 mmol NCO entsprechend 244,2 mmol Harnstoffgruppen pro 402,85 g Fesstoff)

### Gehalt an Urethangruppen pro kg anionisch modifiziertem Polyurethanharnstoff: 2260 mmol (Berechnung: 910,4 mmol pro 402,85 g Feststoff)

### Summe: 2866 mmol aromatische Harnstoffgruppen und Urethangruppen pro kg anionisch modifiziertem Polyurethanharnstoff

Die Bestimmung der Zugscherfestigkeit nach Anwendung des Verfahrens der Nassverklebung ergibt einen Wert von 6,4 N/mm².

### Beispiel 3 (erfindungsgemäß):

240 g (239,5 mmol) eines Polypropylenoxiddiols (OH-Zahl 112, mittleres Molekulargewicht 1000 g/mol) und 25,7 g (191,6 mmol) Dimethylolpropionsäure werden 60 min bei 100°C und 50 mbar entwässert. Anschließend werden 11,4 g Hexandiol-1,6 (96,5 mmol) zugegeben und die Mischung 15 min bei 100°C homogenisiert. Nach Abkühlung auf 70°C werden 121,7 g (699,4 mmol) eines 80:20-Gemisches aus 2,4- und 2,6-Toluylendiisocyanats untergerührt und nach 15 min die Temperatur konstant bei 90°C gehalten. Nach 5 h ist ein Isocyanatgehalt von 3,41 % erreicht. Es wird mit 70 g Aceton verdünnt und 10 min bei 50°C mit 12,6 g (124,5 mmol) Triethylamin versalzt. Anschließend wird die Prepolymermischung unter kräftigem Rühren zu 740 g Wasser gegeben und eine Stunde bei 40°C dispergiert. Nach destillativer Entfernung des Acetons erhält man eine feinteilige Dispersion mit einem Festkörpergehalt von 33%

### Gehalt an aromatischen Harnstoffgruppen der Formel (I) pro kg anionisch modifiziertem Polyurethanharnstoff: 418 mmol

### (Berechnung: 343,6 mmol NCO entsprechend 171,8 mmol Harnstoffgruppen pro 411,4 g Fesstoff)

### Gehalt an Urethangruppen pro kg anionisch modifiziertem Polyurethanharnstoff. 2565 mmol (Berechnung: 1055,2 mmol pro 411,4 g Feststoff)

### Summe: 2983 mmol aromatische Harnstoffgruppen und Urethangruppen pro kg anionisch modifiziertem Polyurethanharnstoff

Die Bestimmung der Zugscherfestigkeit nach Anwendung des Verfahrens der Nassverklebung ergibt einen Wert von 5,4 N/mm².

### Beispiel 4 (erfindungsgemäß):

240 g (239,5 mmol) eines Polypropylenoxiddiols (OH-Zahl 112, mittleres Molekulargewicht 1000 g/mol) und 25,7 g (191,6 mmol) Dimethylolpropionsäure werden 60 min bei 100°C und 50 mbar entwässert. Anschließend werden 22,8 g Hexandiol-1,6 (192,9 mmol) zugegeben und die Mischung 15 min bei 100°C homogenisiert. Nach Abkühlung auf 70°C werden 121,7 g (699,4 mmol) eines 80:20-Gemisches aus 2,4- und 2,6-Toluylendiisocyanats untergerührt und nach 15 min die Temperatur konstant bei 90°C gehalten. Nach 5 h ist ein Isocyanatgehalt von 1,53 % erreicht. Es wird mit 273 g Aceton verdünnt und 10 min bei 50°C mit 12,6 g (124,5 mmol) Triethylamin versalzt. Anschließend wird die Prepolymermischung unter kräftigem Rühren zu 1100 g Wasser gegeben und eine Stunde bei 40°C dispergiert. Nach destillativer Entfernung des Acetons erhält man eine feinteilige Dispersion mit einem Festkörpergehalt von 30%

### Gehalt an aromatischen Harnstoffgruppen der Formel (I) pro kg anionisch modifiziertem Polyurethanharnstoff: 177 mmol

### (Berechnung: 150,0 mmol NCO entsprechend 75,0 mmol Harnstoffgruppen pro 422,8 g Fesstoff)

### Gehalt an Urethangruppen pro kg anionisch modifiziertem Polyurethanharnstoff: 2954 mmol (Berechnung: 1248,8 mmol pro 422,8 g Feststoff)

### Summe: 3131 mmol aromatische Harnstoffgruppen und Urethangruppen pro kg anionisch modifiziertem Polyurethanharnstoff

Die Bestimmung der Zugscherfestigkeit nach Anwendung des Verfahrens der Nassverklebung ergibt einen Wert von 5,3 N/mm².

### Beispiel 5 (erfindungsgemäß):

240 g (239,5 mmol) eines Polypropylenoxiddiols (OH-Zahl 112, mittleres Molekulargewicht 1000 g/mol) und 25,7 g (191,6 mmol) Dimethylolpropionsäure werden 60 min bei 100°C und 50 mbar entwässert. Anschließend werden 5,7 g Hexandiol-1,6 (48,2 mmol) und 1,16 g (8,6 mmol) Trimethylolpropan zugegeben und die Mischung 15 min bei 100°C homogenisiert. Nach Abkühlung auf 70°C werden 121,7 g (699,4 mmol) eines 80:20-Gemisches aus 2,4- und 2,6-Toluylendiisocyanats untergerührt und nach 15 min die Temperatur konstant bei 90°C gehalten. Nach 3,5 h ist ein Isocyanatgehalt von 4,30 % erreicht. Es wird mit 70 g Aceton verdünnt und 10 min bei 50°C mit 12,6 g (124,5 mmol) Triethylamin versalzt. Anschließend wird die Prepolymermischung unter kräftigem Rühren zu 730 g Wasser gegeben und eine Stunde bei 40°C dispergiert. Nach destillativer Entfernung des Acetons erhält man eine feinteilige Dispersion mit einem Festkörpergehalt von 33%

### Gehalt an aromatischen Harnstoffgruppen der Formel (I) pro kg anionisch modifiziertem Polyurethanharnstoff: 509 mmol

### (Berechnung: 414,4 mmol NCO entsprechend 207,2 mmol Harnstoffgruppen pro 406,86 g Fesstoff)

### Gehalt an Urethangruppen pro kg anionisch modifiziertem Polyurethanharnstoff: 2419 mmol (Berechnung: 984,4 mmol pro 406,86 g Feststoff)

### Summe: 2928 mmol aromatische Harnstoffgruppen und Urethangruppen pro kg anionisch modifiziertem Polyurethanharnstoff

Die Bestimmung der Zugscherfestigkeit nach Anwendung des Verfahrens der Nassverklebung ergibt einen Wert von 5,3 N/mm².

### Beispiel 6 (Vergleich):

Anstelle der Polyurethandispersion von Beispiel 1 wird Luphen D259U eingesetzt. Die Bestimmung der Zugscherfestigkeit nach Anwendung des Verfahrens der Nassverklebung ergibt einen Wert von 2,6 N/mm².

### Beispiel 7 (Vergleich):

Anstelle der Polyurethandispersion von Beispiel 1 wird Dispercoll U XP 2643 eingesetzt. Die Bestimmung der Zugscherfestigkeit nach Anwendung des Verfahrens der Nassverklebung ergibt einen Wert von 2,6 N/mm².

### Beispiel 8 (Vergleich):

324 g (323,4 mmol) eines Polypropylenoxiddiols (OH-Zahl 112, mittleres Molekulargewicht 1000 g/mol) und 29,55g (220,3 mmol) Dimethylolpropionsäure werden 60 min bei 100°C und 50 mbar entwässert. Anschließend werden 5,7 g Hexandiol-1,6 (48,2 mmol) zugegeben und die Mischung 15 min bei 100°C homogenisiert. Nach Abkühlung auf 70°C werden 121,7 g (699,4 mmol) eines 80:20-Gemisches aus 2,4- und 2,6-Toluylendiisocyanats untergerührt und nach 15 min die Temperatur konstant bei 90°C gehalten. Nach 4 h ist ein Isocyanatgehalt von 1,69 % erreicht. Es wird mit 160 g Aceton verdünnt und 10 min bei 50°C mit 14,49 g (143,2 mmol) Triethylamin versalzt. Anschließend wird die Prepolymermischung unter kräftigem Rühren zu 1050 g Wasser gegeben und eine Stunde bei 40°C dispergiert. Nach destillativer Entfernung des Acetons erhält man eine feinteilige Dispersion mit einem Festkörpergehalt von 34%

### Gehalt an aromatischen Harnstoffgruppen der Formel (I) pro kg anionisch modifiziertem Polyurethanharnstoff: 217 mmol

### (Berechnung: 215,0 mmol NCO entsprechend 107,5 mmol Harnstoffgruppen pro 495,44 g Fesstoff)

### Gehalt an Urethangruppen pro kg anionisch modifiziertem Polyurethanharnstoff: 2389 mmol (Berechnung: 1183,8 mmol pro 495,44 g Feststoff)

### Summe: 2606 mmol aromatische Harnstoffgruppen und Urethangruppen pro kg anionisch modifiziertem Polyurethanharnstoff

Die Bestimmung der Zugscherfestigkeit nach Anwendung des Verfahrens der Nassverklebung ergibt einen Wert von 3,3 N/mm².

### Beispiel 9 (Vergleich):

288,3 g (287,8 mmol) eines Polypropylenoxiddiols (OH-Zahl 112, mittleres Molekulargewicht 1000 g/mol) und 25,7 g (191,6 mmol) Dimethylolpropionsäure werden 60 min bei 100°C und 50 mbar entwässert. Nach Abkühlung auf 70°C werden 121,7 g (699,4 mmol) eines 80:20-Gemisches aus 2,4- und 2,6-Toluylendiisocyanats untergerührt und nach 15 min die Temperatur konstant bei 90°C gehalten. Nach 3 h ist ein Isocyanatgehalt von 4,00 % erreicht. Es wird mit 77 g Aceton verdünnt und 10 min bei 50°C mit 12,6 g (124,5 mmol) Triethylamin versalzt. Anschließend wird die Prepolymermischung unter kräftigem Rühren zu 810 g Wasser gegeben und eine Stunde bei 40°C dispergiert. Nach destillativer Entfernung des Acetons erhält man eine feinteilige Dispersion mit einem Festkörpergehalt von 33%

### Gehalt an aromatischen Harnstoffgruppen der Formel (I) pro kg anionisch modifiziertem Polyurethanharnstoff: 491 mmol

### (Berechnung: 440,0 mmol NCO entsprechend 220,0 mmol Harnstoffgruppen pro 448,3 g Fesstoff)

### Gehalt an Urethangruppen pro kg anionisch modifiziertem Polyurethanharnstoff: 2139 mmol (Berechnung: 958,8 mmol pro 448,3 g Feststoff)

### Summe: 2630 mmol aromatische Harnstoffgruppen und Urethangruppen pro kg anionisch modifiziertem Polyurethanharnstoff

Die Bestimmung der Zugscherfestigkeit nach Anwendung des Verfahrens der Nassverklebung ergibt einen Wert von 4,0 N/mm².

Wie aus den Beispielen hervorgeht, führen die erfindungsgemäßen Polyurethan- bzw. Polyurethanharnstoffdispersionen auf Polyetherbasis bei der Verwendung als einkomponentige Klebstoffe für die Holzverklebung zu deutlich verbesserten Zugscherfestigkeiten. Diese liegen in den Beispielen 1) bis 5) zwischen 5,3 und 6,7 N/mm². Die in den dem Stand der Technik entsprechenden Vergleichsbeispielen 6) bis 9) gefundenen Werte liegen hingegen nur zwischen 2,6 und 4,0 N/mm²_{.}

## Patentansprüche

1. Wässrige Polyurethanharnstoff-Dispersionen enthaltend ein Polyurethanharnstoff-Polymer mit Struktureinheiten der allgemeinen Formel (I) 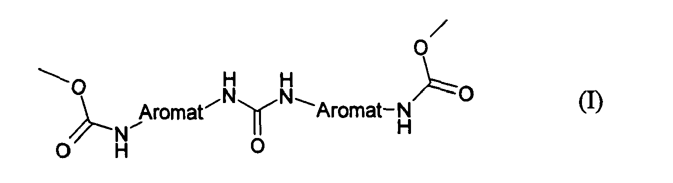 in welcher Aromat = Phenylen, Tolylen, Xylylen, Tetramethylxylylen oder Diphenylenmethan ist und welches aufgebaut ist aus
A) einem oder mehreren aromatischen Diisocyanaten,
B) mindestens einem Polyetherpolyol mit einem zahlenmittleren Molekulargewicht von 300 bis 1500 Da,
C) mindestens einer Verbindung, welche ein bis zwei isocyanatreaktive Gruppen sowie mindestens eine ionogene Gruppe aufweist,
D) mindestens einem Polyol mit einem zahlenmittleren Molekulargewicht von 60 bis 499 Da,
E) Wasser,
wobei die mittlere Gesamtfunktionalität der isocyanatreaktiven Verbindungen B) bis D) von 1,85 bis 2,2 beträgt und in dem Polyurethanharnstoff-Polymer die Summe des Gehaltes an aromatischen Harnstoffgruppen und des Gehaltes an Urethangruppen 2700 bis 5000 mmol pro kg Polyurethanharnstoff-Polymer beträgt.

2. Wässrige Polyurethanharnstoff-Dispersionen gemäß Anspruch 1, **dadurch gekennzeichnet, dass** die mittlere Funktionalität der Polyetherpolyole 1,92 bis 3 beträgt.

3. Wässrige Polyurethanharnstoff-Dispersionen gemäß Anspruch 1, **dadurch gekennzeichnet, dass** das Polyetherpolyol B) ein Homopolyadditionsprodukt des Propylenoxids mit einem Molekulargewicht von 750 bis 1250 Da und einer Funktionalität von 1,95 bis 2,05 ist.

4. Verfahren zur Herstellung der wässrigen Polyurethanharnstoff-Dispersionen gemäß Anspruch 1, **dadurch gekennzeichnet, dass** die Komponenten A), B), C) und D) zur Herstellung eines Polyurethan-Prepolymers im Rektor ganz oder teilweise vorgelegt werden und gegebenenfalls mit einem mit Wasser mischbaren aber gegenüber Isocyanatgruppen inerten Lösungsmittel verdünnt und auf Temperaturen im Bereich von 50 bis 120°C aufgeheizt und anschließend die gegebenenfalls zu Beginn der Reaktion noch nicht zugegebenen Bestandteile A), B), C) oder D) zudosiert werden und vor oder während der Dispergierung eine Neutralisation mit einem geeigneten Neutralisationsmittel erfolgt und anschließend das gegebenenfalls eingesetzte organische Lösungsmittel abdestilliert wird.

5. Verfahren gemäß Anspruch 4, **dadurch gekennzeichnet, dass** bei der Herstellung des Prepolymers die Einsatzmengen der Einzelkomponenten A) bis D) so bemessen werden, dass eine Isocyanatkennzahl von 1,05 bis 3,0 resultiert.

6. Verfahren gemäß Anspruch 4, **dadurch gekennzeichnet, dass** der Isocyanatgehalt der Prepolymere zwischen 1,0 und 9,0 % liegt.

7. Verwendung der wässrigen Polyurethanharnstoff-Dispersionen gemäß Anspruch 1 zur Herstellung von Beschichtungen von flächigen Gebilden oder als Klebstoff.

8. Klebstoffe, enthaltend wässrige Polyurethanharnstoff-Dispersionen gemäß Anspruch 1.

9. Klebstoffverbund, aufgebaut aus einem oder mehreren Substrat(en), die gleich oder verschieden sein können sowie einer Klebstoffschicht, enthaltend die Polyurethanharnstoff-Dispersionen gemäß Anspruch 1.

10. Klebstoffverbund gemäß Anspruch 9, aufgebaut aus einem oder mehreren Substraten, ausgewählt aus der Gruppe der Glasfaser-, Kohlefaser- oder Mineralfasergewebe und einer Klebstoffschicht, enthaltend Polyurethanharnstoff-Dispersionen gemäß Anspruch 1 sowie einem mineralischen Untergrund.

11. Klebstoffverbund gemäß Anspruch 9, aufgebaut aus zwei Holzsubstraten und einer Klebstoffschicht, enthaltend Polyurethanharnstoff-Dispersionen gemäß Anspruch 1.

12. Klebstoffverbund gemäß Anspruch 9, aufgebaut aus einem mit polymerem Material gebundenem Korkgranulat, einer Korkscheibe und einer Klebstoffschicht, enthaltend Polyurethanharnstoff-Dispersionen gemäß Anspruch 1.
